# EUROPEAN PATENT APPLICATION

(11) **EP 2 857 934 A1**
(43) Date of publication of application: **08.04.2015**
(21) Application number: 14186701.0
(22) Date of filing: 26.09.2014
(51) Int. Cl.: G06F 3/01, G06F 3/03, G06F 3/0354

(54) **Method and apparatus for determining the pose of a light source using an optical sensing array**

(30) Priority: 03.10.2013 US 201361886575 P; 16.09.2014 US 201414488146
(71) Applicant: Samsung Display Co., Ltd., Gyeonggi-Do (KR)
(72) Inventor: McCartney, Richard I., San Jose, CA 95112 (US); Hoffman, David M., San Jose, CA 95112 (US)
(74) Representative: Dr. Weitzel & Partner

(57) **Abstract**

A pose determination system includes a light source configured to emit a pattern of light corresponding to three or more non-collinear points, and a display panel including a plurality of optical sensors in a display area. The optical sensors are configured to detect the light pattern. The pose determination system is configured to determine a position of the light source with respect to the display panel utilizing the detected light pattern. A method for determining a pose of a light source with respect to a display panel includes emitting light from the light source and having a pattern corresponding to three or more non-collinear points, detecting the light pattern utilizing a plurality of optical sensors in a display area of the display panel, and determining by a processor a position of the light source with respect to the display panel utilizing the detected light pattern.

## Description

### CROSS-REFERENCE TO RELATED APPLICATION(S)

This application claims priority to U.S. Provisional Application No. 61/886,575, filed on October 3, 2013.

### BACKGROUND

### 1. Field

Aspects of embodiments of the present invention are directed to a pose determining system, a method for determining the pose of a light source, and a display panel for determining the pose of a light source.

### 2. Description of Related Art

The pose of an object (such as a handheld pointer) refers to both its position - for example, x/y/z coordinates, or (right/left)/(forward/back)/(up/down) - and orientation (for example, pitch/yaw/roll) relative to a point of reference (e.g., a display device), and may be expressed using six degrees of description in three-dimensional (3-D) space. Real-time pose determination allows an object to be tracked in real time. Previous techniques for determining an object's (e.g., a moving object's) pose through automated means (such as a computer or other processor-driven electronic device) have disadvantages such as being too slow or inefficient, too inaccurate, too bulky, too complex, or too limited or otherwise restricted (like only working well on objects within a narrow range of distances from a reference point, or determining fewer than six degrees of description) to be useful in practical real-time settings.

### SUMMARY

Embodiments of the present invention provide for a method to use a light beam pointer (or light source) or a plurality of light beam pointers (or light sources) to interact with a display from a remote position in proximity to the display. Such a pointer provides a new user interface that can be used to implement features similar to those provided by a computer mouse or track ball, as well as additional features such as a screen drawing device, a head or other body part(s) tracking device, a game weapon, a tracking or control device, a device for implementing other general user interface functions, etc.

Further embodiments of the present invention make use of separate images from a plurality of light beams cast onto the display with an embedded optical sensor array to determine the pose of each light beam source with respect to the display. The pose of each light source can be determined through homography analysis with six degrees of description (x, y, z, pitch, yaw, and roll) relative to the display reference frame.

Still further embodiments of the present invention use homography analysis to efficiently determine the pose of an object (such as with respect to a display device) across a wide range of situations. Example embodiments are capable of quickly (such as in real time) and accurately (such as in all six degrees of description) determining the object's pose across a wide range of distances (including near and far) from the display device than is possible with existing systems. Such embodiments are also capable of real-time tracking of the objects by performing real-time pose determination of the objects by tracking their corresponding light sources.

Yet further embodiments of the present invention are directed to a display device and in particular to a new user interface (such as through a laser pointer) to a display device. These embodiments are highly versatile, providing functionality and versatility beyond those of a mouse or other pointing device, for example, by providing support for multiple pointers with six degrees of pose description to create new user interfaces. These interfaces may enable new games, enable new 3-D display interaction, provide a new collaboration screen for meeting rooms and teaching environments, and other new interactions with a display-based device.

According to an embodiment of the present invention, a pose determination system is provided. The pose determination system includes a light source configured to emit a pattern of light corresponding to three or more non-collinear points, and a display panel including a plurality of optical sensors in a display area. The optical sensors are configured to detect the light pattern. The pose determination system is configured to determine a position of the light source with respect to the display panel utilizing the detected light pattern.

The light pattern may be asymmetric with respect to rotations.

A portion of the light pattern may be modulated differently than a remainder of the light pattern.

The pose determination system may be further configured to determine the position of the light source with respect to the display panel by detecting a corresponding said three or more non-collinear points in the detected light pattern

The pose determination system may further include a pointer including the light source.

The pointer may include two or more pointers having separable respective said light patterns. The pose determination system may be further configured to determine positions of the two or more pointers with respect to the display panel utilizing respective said detected light patterns.

The pose determination system may further include a processor configured to utilize a reference said light pattern and the detected light pattern to determine the position of the light source with respect to the display panel.

The processor may be further configured to compare the detected light pattern against the reference light pattern.

The processor may be further configured to determine an orientation of the light source with respect to the display panel utilizing the detected light pattern.

The processor may be further configured to determine six degrees of positional information of the light source with respect to the display panel utilizing the detected light pattern.

The processor may be further configured to determine the position and the orientation of the light source with respect to the display panel utilizing homography analysis.

The light source may include a laser and one or more diffraction optics in front of the laser.

The light source may include a non-collimated light source and a patterned light mask in front of the non-collimated light source.

According to another embodiment of the present invention, a method for determining a pose of a light source with respect to a display panel is provided. The method includes emitting light from the light source and having a pattern corresponding to three or more non-collinear points, detecting the light pattern utilizing a plurality of optical sensors in a display area of the display panel, and determining by a processor a position of the light source with respect to the display panel utilizing the detected light pattern.

The light source may include two light or more light sources configured to emit separable respective said light patterns. The method may further include determining the positions of each of the two or more light sources with respect to the display panel utilizing respective said detected light patterns.

The method may further include comparing by the processor the detected light pattern against a reference said light pattern.

The method may further include determining by the processor an orientation of the light source with respect to the display panel utilizing the detected light pattern.

In yet another embodiment of the present invention, a display panel for determining a pose of a pointer including a light source configured to emit light having a pattern corresponding to three or more non-collinear points is provided. The display panel includes a display area including a plurality of optical sensors configured to detect the light pattern as emitted from the light source, and a processor. The processor is configured to determine a position of the pointer with respect to the display panel by detecting a corresponding said three or more non-collinear points in the detected light pattern.

The pointer may include two or more pointers having separable respective said light patterns. The processor may be further configured to determine the positions of the two or more pointers with respect to the display panel utilizing respective said detected light patterns.

The processor may be further configured to determine an orientation of the pointer with respect to the display panel utilizing the detected light pattern.

### BRIEF DESCRIPTION OF THE DRAWINGS

The patent application file contains at least one drawing executed in color.

The accompanying drawings, together with the specification, illustrate example embodiments of the present invention. These drawings, together with the description, serve to better explain aspects and principles of the present invention.
FIG. 1 is a schematic diagram of an example apparatus, including a display device and an optical pointing device, for determining the pose of the optical pointing device according to an embodiment of the present invention.
FIG. 2 is a schematic diagram of an example operation of the apparatus of FIG. 1 according to an embodiment of the present invention.
FIG. 3 is an illustration of an example light pattern emitted from an optical pointing device according to an embodiment of the present invention.
FIG. 4 is an illustration of example light pattern emitted from an optical pointing device according to another embodiment of the present invention.
FIGs. 5-6, which include FIGs. 5(a), 5(b), 6(a), and 6(b), illustrate the light pattern of FIG. 3 being projected onto a display panel from different orientations.
FIG. 7, which includes FIGs. 7(a), 7(b), and 7(c), illustrates the light pattern of FIG. 3 being projected onto a display panel using different rotations.
FIG. 8, which includes FIGs. 8(a) and 8(b), illustrates the light pattern of FIG. 3 being projected onto a display panel from different distances.
FIGs. 9-10 illustrate example light beam sources according to embodiments of the present invention.
FIG. 11 is a flowchart of an example method for determining a pose of a light source with respect to a display device according to an embodiment of the present invention.

### DETAILED DESCRIPTION

Example embodiments of the present invention will now be described with reference to the accompanying drawings. In the drawings, the same or similar reference numerals refer to the same or similar elements throughout. Herein, the use of the term "may," when describing embodiments of the present invention, refers to "one or more embodiments of the present invention." In addition, the use of alternative language, such as "or," when describing embodiments of the present invention, refers to "one or more embodiments of the present invention" for each corresponding item listed.

One or more embodiments of the present invention are directed toward a method and apparatus for determining the pose of an optical pointer or other light source with six degrees of description using an optical sensing array, such as an optical sensing array embedded in a display device (or "display" for short). Embodiments of the present invention make use of an optical sensing array embedded in a display to determine the pose (such as position and orientation with respect to the display) of one or more light beam sources each having uniquely identifying projection patterns. The position of each light source can be determined through homography (or homography analysis) with six degrees of description (e.g., x, y, z, pitch, yaw, and roll) relative to the display reference frame. Homography is a branch of geometry in which distortions introduced by projections onto a surface can be analyzed to reconstruct the origin of the projections.

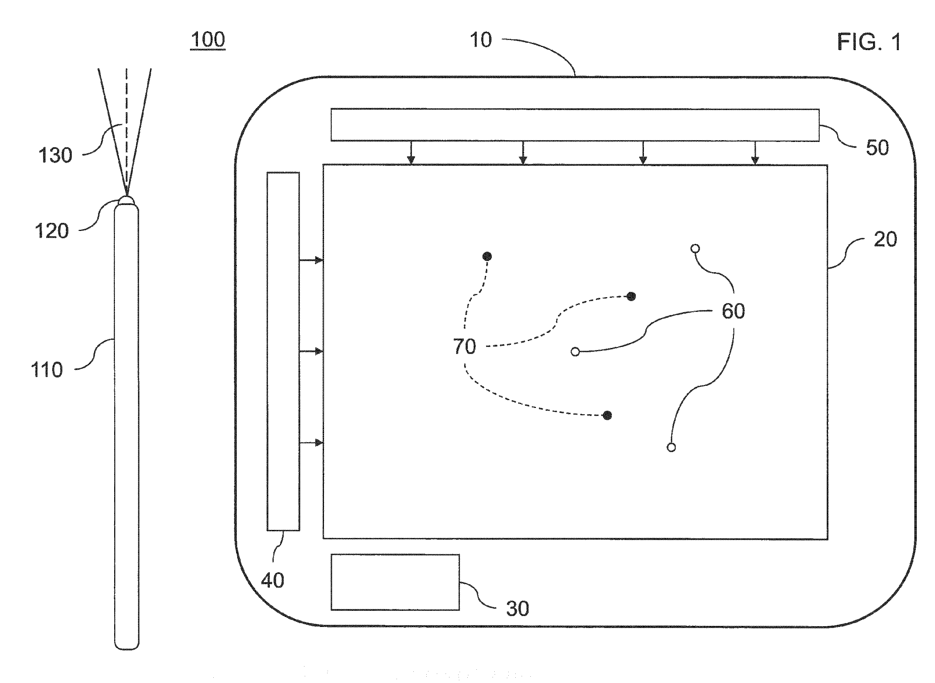

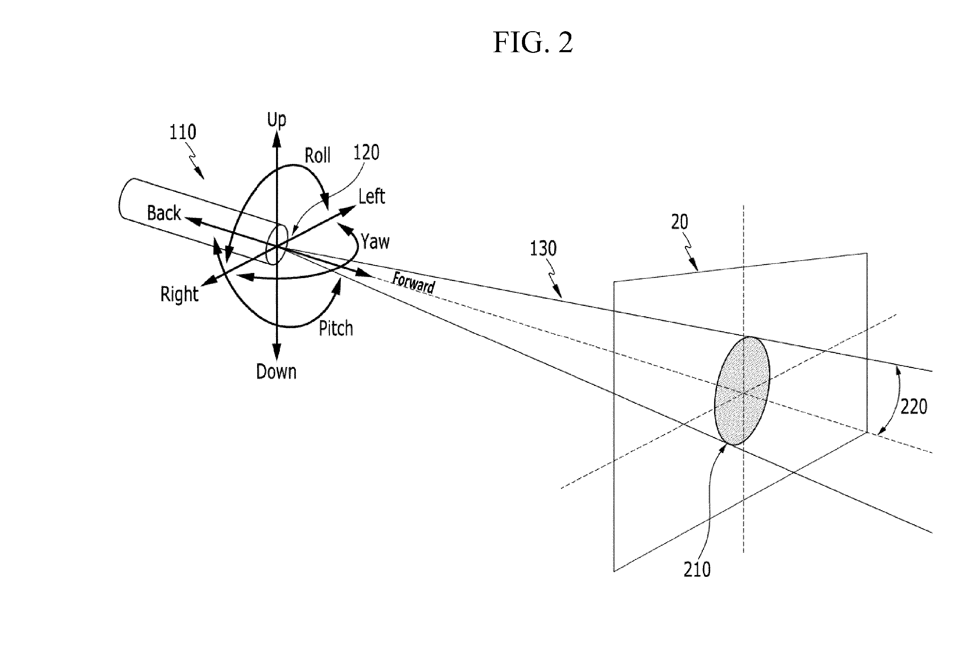

An example embodiment of the present invention will now be described with reference to FIGs. 1-2. FIG. 1 is a schematic diagram of an example apparatus 100, including a display device 10 and an optical pointing device (or pointer) 110, for determining the pose of the optical pointing device 110 with respect to the display device 10 according to an embodiment of the present invention. FIG. 2 is a schematic diagram of an example operation of the apparatus 100 of FIG. 1 according to an embodiment of the present invention.

The display device 10 includes a display panel 20 and a controller 30. The display device 10 may further include a scan driver 40 and a data driver 50 for driving pixels 60 (for example, pixels 60 at crossing regions of horizontal scan lines emanating from the scan driver 40 and vertical data lines emanating from the data driver 50). The display panel 20 may be a flat panel display panel, such as an OLED display panel, for displaying images (for example, color images using red, green, and blue pixels 60 configured to respectively emit red, green, and blue light) to a user or viewer of the display panel.

The display device 10 also includes a plurality of optical sensors 70, such as an array of optical sensors 70, embedded or arranged among the pixels 60. For example, the optical sensors 70 may be as numerous as one of the colors of pixels 60, or the sensors 70 may be densely distributed among the pixels 60, like in a matrix pattern, such as one sensor 70 for every 16 pixels 60. The embedded optical sensor array 70 may be used to determine the pose of a light beam source directed at the display panel 20 through, for example, homography analysis, as will be described in more detail later. The optical sensors 70 may be configured to sense particular wavelengths or wavelength ranges of light, including light (such as infrared light) that is normally invisible to humans.

The controller 30 controls operations of the display device 10, such as the pixels 60 of the display panel 20 and the optical sensors 70. The controller 30 may control the pixels 60, for example, by controlling the scan driver 40 and the data driver 50 (e.g., by receiving image signals from an outside source, converting them to corresponding data signals to drive the pixels 60, and supplying the data signals to the data driver 50). The controller 30 may control the optical sensor array 70 by periodically (such as every frame or every several frames) measuring the light intensity, frequency, etc., at each sensor 70, and using the measured light intensities or other measurements to discern optical pointer light patterns being directed to and received by the display panel 20. While the controller 30 is illustrated in FIG. 1 as one component, it may also be implemented as multiple components or microprocessors (for example, one for controlling image generation, one for performing pattern recognition using the optical sensor data, etc.) as would be apparent to one of ordinary skill.

The pointing device 110 (such as a laser or other optical pointer) includes a light source 120 from which an optical pattern 130 emits. The light source 120 may be visible light or invisible light (such as infrared light), or a particular wavelength or wavelength range of light, such as a wavelength for which optical sensor array 70 is capable of detecting. The light source 120 may emit near-collimated light (for example, light that gradually spreads out as it propagates from the source 120). The light pattern 130 may have a recognizable orientation and spatial warp (e.g., the light pattern 130 may contain features that may be used to determine rotations and perspective distortion), with the optical sensors 70 being configured to detect the light pattern 130 and measure its spatial attributes. The light pattern 130 may be emitted using two or more modulations (e.g., colors, intensities, pulse rates, etc.) of the light to further characterize the pattern 130.

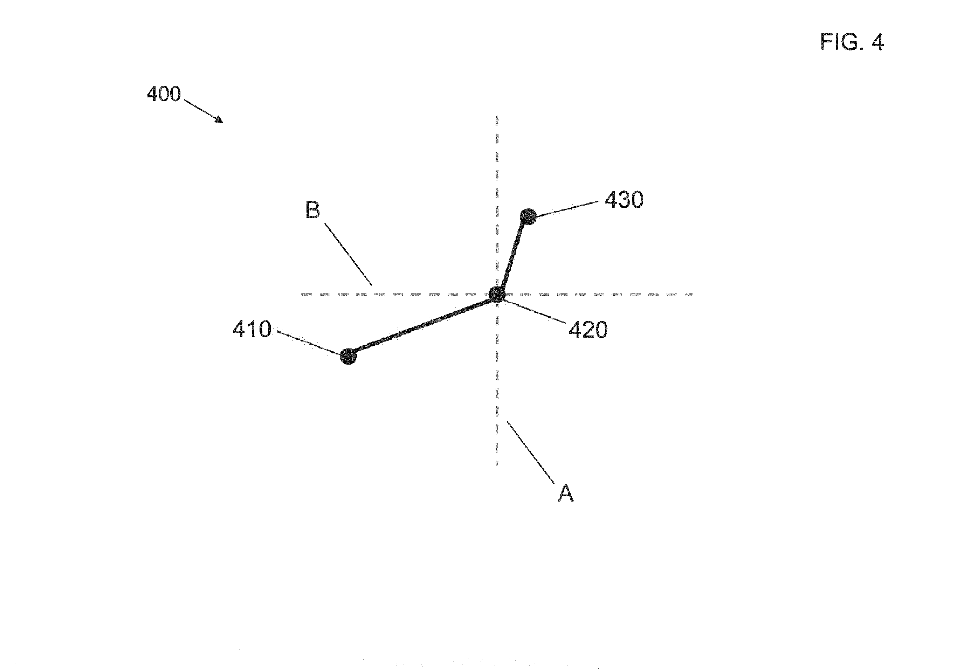

As a non-limiting example, the light pattern 130 may be assumed to be (or equivalent to, or to uniquely define) a small set of uniquely identifiable non-collinear points, such as three or four points (as in FIG. 4, which illustrates three non-collinear points). For example, the pattern 130 may be rotationally asymmetric (that is, have no rotational symmetry about any point), or any one of the points exhibiting rotational symmetry with another point may be distinguished from the other points with which it is rotationally symmetric (e.g., one of the points may be modulated differently than the others).

That is, the pattern 130 may be provided by the light source 120 in such a manner that, when compared to a known reference pattern, the orientation of the light source 120 with respect to the optical sensing array 70 may be determined by one of ordinary skill (using, for example, homography analysis). The points of the projected image may thus be uniquely identified to solve the correspondence problem, namely uniquely matching each of the projected points to their corresponding points in the light pattern 130 transmitted from the light source 120 as measured by the optical sensing array 70, including distinct light patterns 130 from multiple light sources 120. Put another way, the spatial pattern may be distinct such that the display system may solve the correspondence of identifying which individual points on the screen map to their respective points of the pointer's reference pattern.

It should be mentioned that the term "points" is used herein to refer to well-defined locations of discrete entities. For example, the "points" of light should have sufficient definition that they can be detected by the optical sensor array 70 (e.g., the center of any grouping of optical sensors 70 whose corresponding sense values are determined to represent the same projected object may be thought of as a "point").

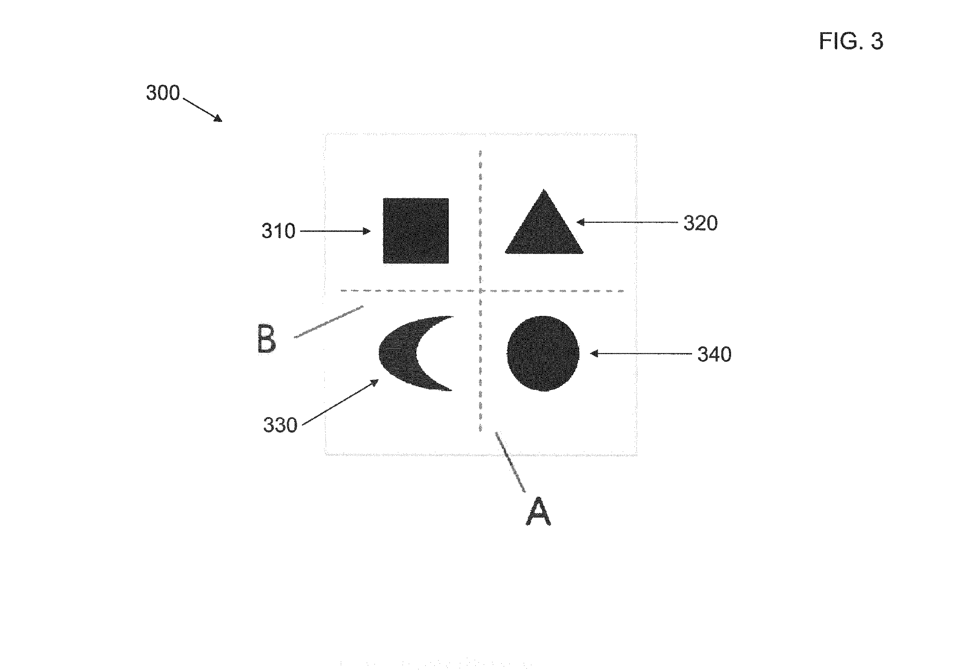

These small number of points may be part of (or derivable from) a more complex asymmetric pattern (as in FIG. 3), the various shapes or other components making up the complex pattern (or spatial pattern) being used to determine the locations of the small number of points (e.g., three or four) of interest. However, geometrical asymmetry of a more complex pattern (or spatial pattern) is but one technique of transmitting a pattern 130 of light from the light source 120 to the optical sensing array 70 in such a manner that a correspondence can be established between the (points of the) received light pattern at the optical sensing array 70 and the (points of the) reference pattern such that the pose of the light source 120 can be determined with respect to the optical sensing array 70 by one of ordinary skill.

Thus, using a unique spatial pattern may be thought as modulating the small number of points in such a manner that the receiving device can demodulate the received signal and identify the small number of points by correspondence to the reference pattern. There are, however, many modulation techniques and different modulation values within such techniques that may be used to accomplish the same task, as would be apparent to one of ordinary skill. As non-limiting examples of how the light pattern 130 may be modulated and transmitted, again assuming the underlying pattern 130 to be a small number of asymmetrically arranged points, the pattern 130 may be transmitted with different light modulation for one of the points, such as a different brightnesses, temporal sequence (e.g., using pico projector technology), color, size, shape, pulse pattern, etc., or combinations of these modulations to enable a person of ordinary skill to identify the distinct points from their corresponding optical sensor array 70 sensor readings.

For example, assuming three points P, Q, and R make up a particular pattern 130, one of the points may be transmitted with a different color (e.g., P is red, Q and R are blue), a different brightness (e.g., P is bright, Q and R are dim), temporal sequence (e.g., P is the first transmitted point in a set, Q and R are transmitted second, or second and third, respectively), size (e.g., P is large, Q and R are small), shape (e.g., P is a triangle, Q and R are circles), pulse pattern (e.g., P is pulsed, Q and R are constant), etc. In other embodiments, each of the points may be transmitted with a different modulation, such as transmitting P, Q, and R with different colors, brightnesses, sizes, shapes, pulse patterns (e.g., P is fast pulsed, Q is slow pulsed, R is constant), etc., which makes solving the correspondence problem even easier.

While one pointing device 110 is shown in FIG. 1, the present invention is not limited thereto. In other embodiments, the apparatus 100 is capable determining the pose of numerous such pointing devices 110. For example, each of the pointing devices 110 may be configured to emit light having a different pattern (such as a unique pattern), and the display device 10 may be configured to detect each such pattern separately from the other patterns. As non-limiting examples, the above technique of modulation may be applied to the different patterns, such as each pattern using a different modulation technique, or using the same modulation technique only with different modulations, or using different combinations of modulation techniques or modulations to enable a virtually unlimited number of such pointers to be tracked concurrently as would be apparent to one of ordinary skill. Such different light patterns will be referred to as "separable" throughout.

For instance, using pico projector technology, two patterns of three points apiece (say, P1/Q1/R1 and P2/Q2/R2) may be transmitted in sequences of six pulses (in order, P1, Q1, R1, P2, Q2, and R2), thus quickly enabling their demodulation into the correct correspondence of their emitting light patterns. As another example, when using multiple distinct spatial patterns to differentiate the pointing devices 110, the spatial patterns may be distinct such that the display system may solve the collective correspondence of identifying which of the pointing devices created the points detected on the screen, and further determining the correspondence of individual points on the screen to their respective point of the pointer's reference pattern.

In FIG. 2, the display device 10 is illustrated conceptually as the display panel 20 on which the emitted optical pattern 130 from the pointing device 110 (or other optical source) is being received. The display panel 20 has an embedded optical sensing array 70. The apparatus 100 (for example, the display device 10) is configured to determine the pose (e.g., six degrees of position and orientation information) of the pointing device 110 with respect to the display panel 20.

In further detail, the emitted light pattern 130 creates a distorted image 210 that falls on the embedded optical sensing array 70. The distorted image 210 is sensed by the sensing array 70 and analyzed in relation to (for example, compared to) a known reference image of the emitted pattern 130 to determine the source position and orientation of the pointing device 110 with respect to the sensing array 70 using six degrees of description. For example, the controller 30 may be programmed with homography tools as known to one of ordinary skill, and take inputs as sensed by the sensing array 70, interpreted by the controller 30, or provided to the controller (such as a reference image).

These inputs may include the size and arrangement of the distorted image 210. From these, the controller 30 may then estimate the distance to the light source 120 given the angular spread of the features in the reference image (e.g., infer the distance to the pointing device 110 based on the size of the image detected by the optical sensing array 70 and a known angular size of the corresponding features in the reference image) and determine the corresponding position and orientation of the pointing device 110 (or more precisely, of its light source 120), that is, the pose of the pointing device 110 with respect to the display panel 20.

FIG. 3 is an illustration of an example illumination pattern (or spatial pattern) 300 emitted from an optical pointing device according to an embodiment of the present invention.

The light pattern 300 may be emitted from a near-collimated light source (e.g., the light slightly spreads out spatially as it propagates from the source). The light pattern 300 includes four shapes-square 310, triangle 320, crescent 330, and circle 340-with two imaginary lines A and B illustrated for reference. The light pattern 300 possesses both left-right and up-down image asymmetry. For instance, there are no orthogonal axes A and B such that the pattern 300 displays symmetry about axis A or axis B. The pattern 300 also exhibits no rotational symmetry.

In further detail, it will be understood that left, right, up, and down are defined relative to an imaginary reference frame. With left-right asymmetry, the two part-images formed on each side of an imaginary line A drawn through a point (for example, where lines A and B meet) in the image are not mirror images. In a similar fashion, with up-down asymmetry, the two part-images formed on each side of a second imaginary line B drawn orthogonally through this same point are not mirror images.

It should be noted that light pattern 300 is but one example of an unlimited number of such patterns as would be apparent to one of ordinary skill, and the present invention is not limited thereto. For example, FIG. 4 is an illustration of another example light pattern 400 emitted from an optical pointing device according to an embodiment of the present invention. Light pattern 400 is much simpler than light pattern 300, yet still has left-right and up-down asymmetry. Light pattern 400 also exhibits no rotational symmetry.

In FIG. 4, light pattern 400 is shown as three points 410, 420, and 430, with connecting lines, but the three points alone are sufficient to establish the asymmetry in both left-right and up-down to establish correspondence, as well as no rotational symmetry. Further, as would be apparent to one of ordinary skill, an asymmetric light pattern may be reduced to a sufficient number of points (such as three) that determine the orientation of the light pattern as projected on the display panel. However, the other parts of the light pattern may be useful in identifying these points (e.g., solving the correspondence problem) from a particular orientation of the light pattern with respect to the display panel.

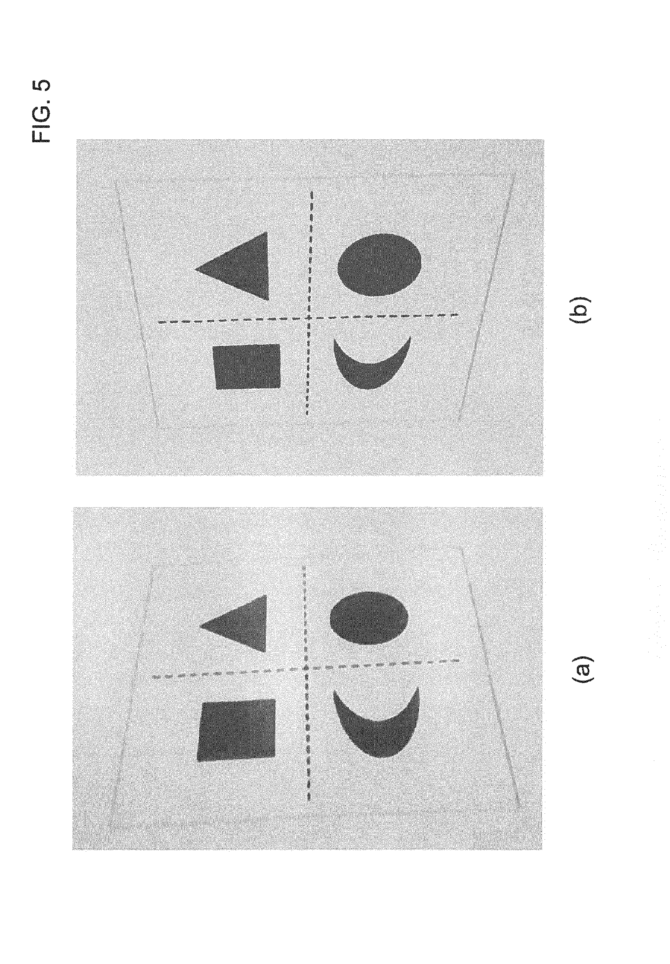

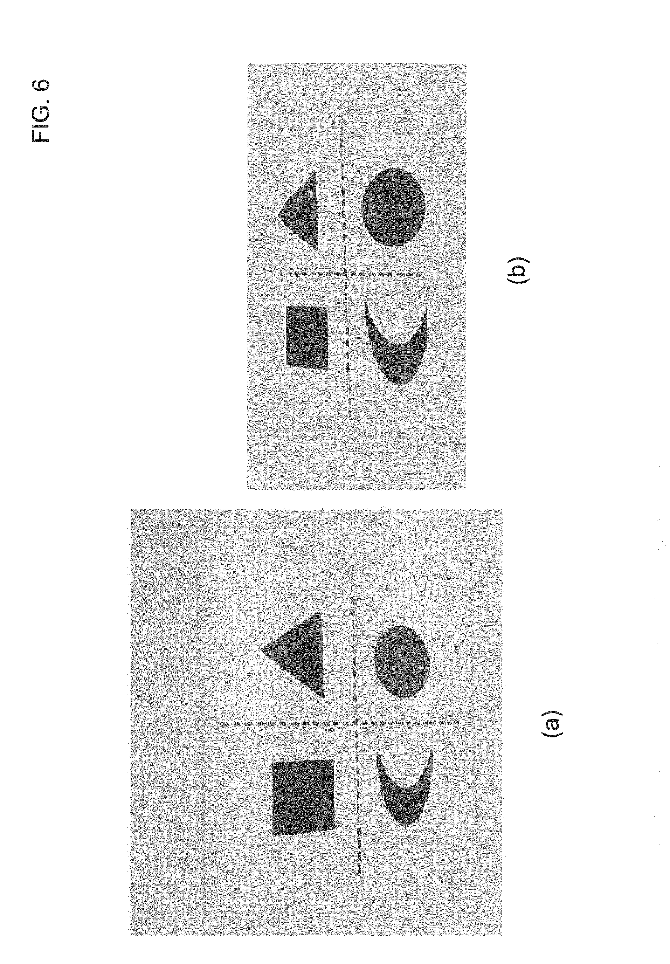

FIGs. 5-6, which include FIGs. 5(a), 5(b), 6(a), and 6(b), illustrate the light pattern 300 of FIG. 3 being projected onto a display panel from different orientations.

In FIG. 5(a), the projection is approximately 45° to the right of the normal to the display panel. In FIG. 5(b), the projection is approximately 45° to the left of the normal to the display panel. In FIG. 6(a), the projection is approximately 45° below the normal to the display panel. In FIG. 6(b), the projection is approximately 45° above the normal to the display panel. In FIGs. 5(a) and (b), the optical source is rotated (yawed) around the vertical axis. In FIGs. 6(a) and (b), the optical source is rotated (pitched) around the horizontal axis. Analysis of homography between the reference version (see, for example, FIG. 3) and measured version of the image allows the determination of the rotation angle (yaw or pitch), as would be apparent to one of ordinary skill. It will be further understood by someone of ordinary skill that the same analysis will determine compound pitch and yaw angles when the projected image is a result of compound pitch and yaw rotations of the optical source.

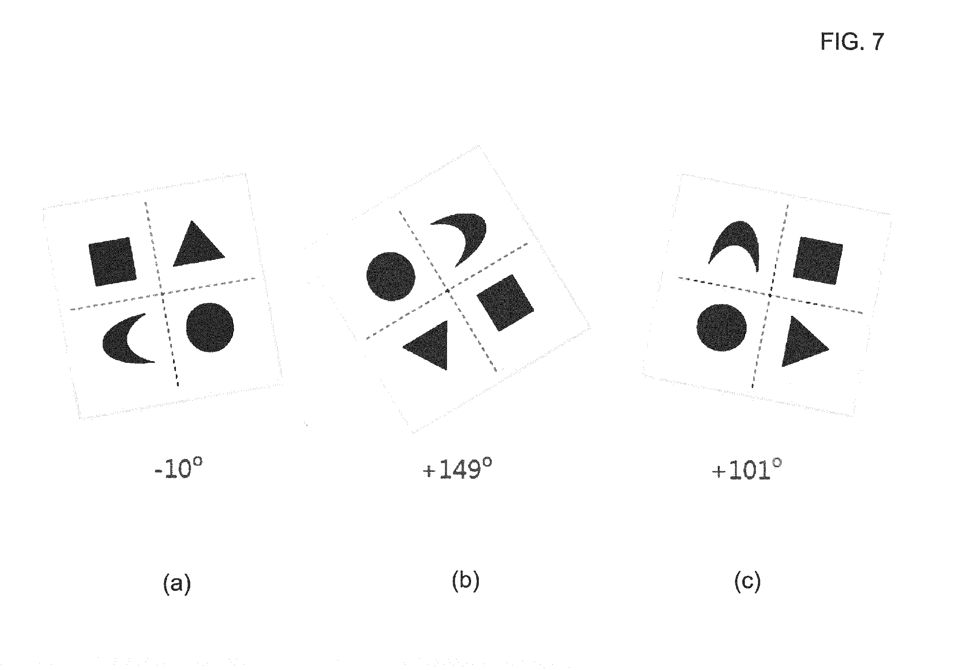

FIG. 7, which includes FIGs. 7(a), 7(b), and 7(c), illustrates the light pattern of FIG. 3 being projected onto a display panel using different rotations (or rolls).

In the three renderings in FIG. 7, the light pattern image is rotated, or rolled, about the axis of propagation with respect to the display panel. For example, in FIG. 7(a), the rotation (or roll) is -10° (i.e., 10° counterclockwise), in FIG. 7(b), the rotation is +149° (i.e., 149° clockwise), and in FIG. 7(c), the rotation is +101° (i.e., 101° clockwise). Comparison with a reference version (see, for example, FIG. 3) of the image allows the determination of the rotation angle relative to the sensor array coordinates, as would be apparent to one of ordinary skill. It will be further understood by someone of ordinary skill that a homographic analysis used to determine roll angle may be combined to determine compound pitch and yaw angles of the optical source as well as to provide a pitch, yaw, and roll determination of the optical source.

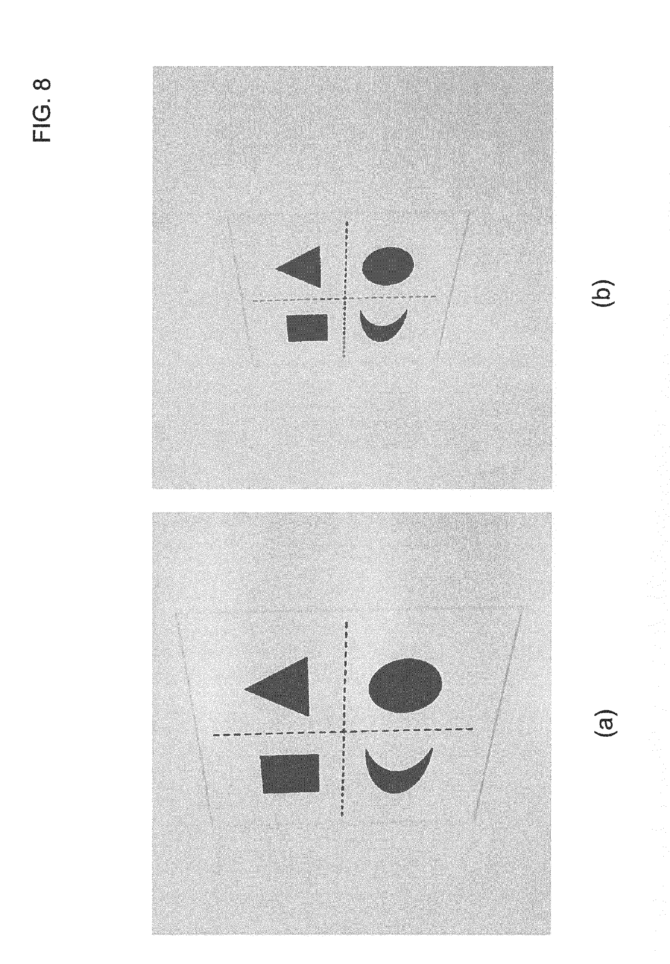

FIG. 8, which includes FIGs. 8(a) and 8(b), illustrates the light pattern of FIG. 3 being projected onto a display panel from different distances.

The orientation of the light source with respect to the display panel is the same for both

FIGs. 8(a) and 8(b). However, the position of the light source is different, with the position of the light source generating the light pattern of FIG. 8(b) being 70% of the distance to the display panel as the light source generating the light pattern of FIG. 8(a).

Accordingly, as evident from FIGs. 8(a) and 8(b), the image in FIG. 8(b) is 70 percent of the size of the image in FIG. 8(a). It can be said then, that the distance between the image on the sensing array and the optical source producing the image of FIG. 8(b) is 70 percent of the distance between the optical source producing the image of FIG. 8(a).

Generally then, image size information, combined with a knowledge of the angle of deviation from collimation (see, for example, FIG. 2) of the light propagating from the light source and a known reference image (see, for example, FIG. 3) allows computation of the absolute distance to the light source relative to the sensing array, as would be apparent to one of ordinary skill. The distance computation can be combined with the pitch, yaw, and roll angle information to know the position of the light source relative to the embedded sensing array (and thereby the display) with 6-degrees of positional information (x, y, z, pitch, yaw, and roll).

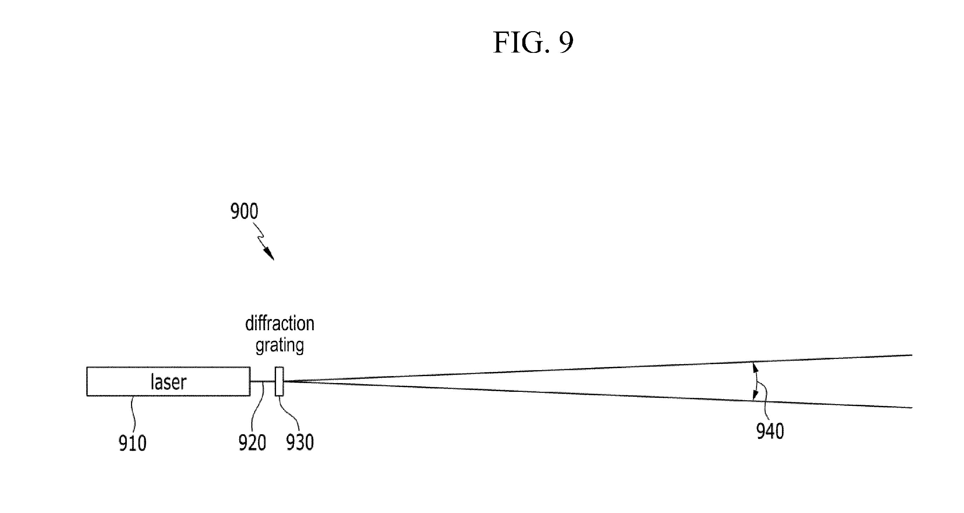

FIGs. 9-10 illustrate example light beam sources 900 and 1000 according to embodiments of the present invention.

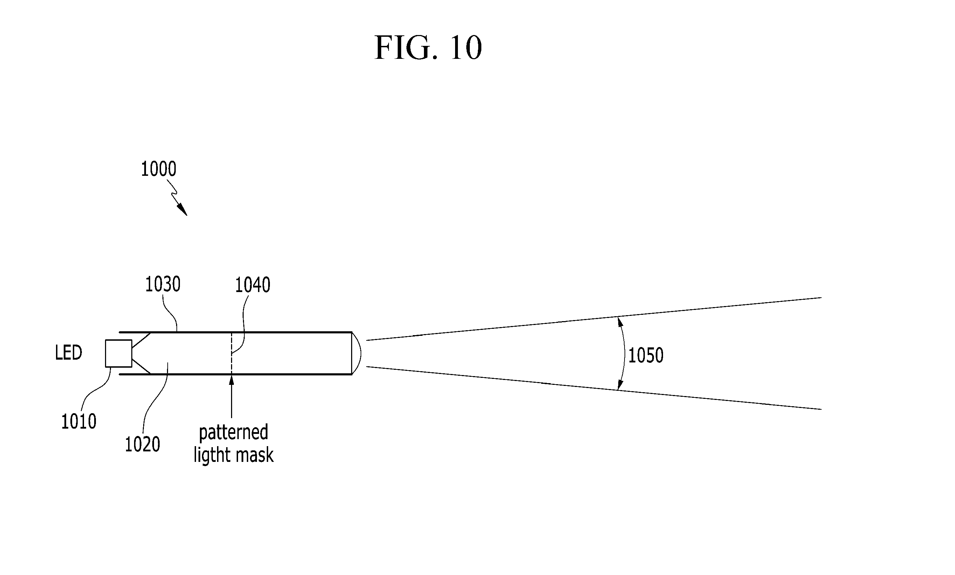

In the light beam source 900 of FIG. 9, a laser light source 910 emits a collimated beam 920 of light, which passes through custom diffraction optics 930 (such as a diffraction grating) to create a projection pattern 940 with the desired deviation from collimation and light pattern, such as an asymmetrical light pattern as described above. In the light beam source 1000 of FIG. 10, a non-collimated light beam source 1010, such as a light emitting diode (LED) or other near point-source, emits a non-collimated beam 1020 of light, which is contained by walls 1030 and partially collimated through a lens having a patterned light mask 1040 to create a projection pattern 1050 with the desired deviation from collimation and light pattern, such as an asymmetrical light pattern as described above.

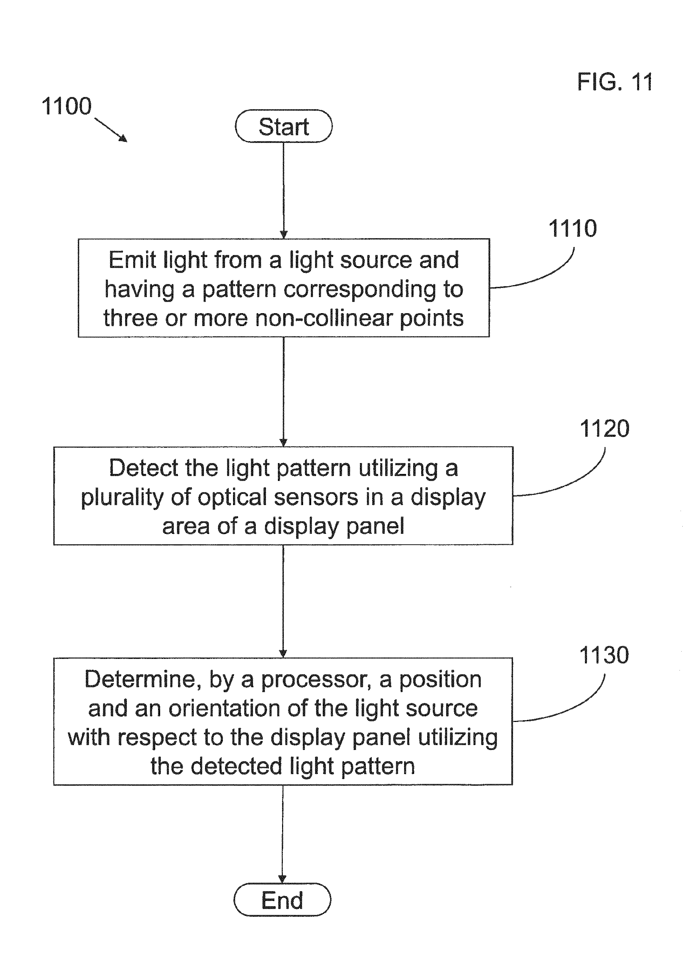

FIG. 11 is a flowchart of an example method 1100 for determining a pose of a light source with respect to a display device according to an embodiment of the present invention. This and other described methods in the present application may be performed, for example, by a computer processor executing computer instructions that perform the described methods, as would be apparent to one of ordinary skill. Further, in this and other described methods of the present invention, the appearance or ordering of the steps is not necessarily limited to that which is described, and in other embodiments, the appearance or ordering of the steps may be altered to achieve the same or similar result, as would be apparent to one of ordinary skill.

Processing begins, and in step 1110, light is emitted light from the light source (for example, a pointer) toward the display panel. The light has a pattern as described above. For example, the light pattern may correspond to three or more non-collinear points (e.g., a rotationally asymmetric pattern, or a different modulation used for one portion of the light pattern compared to the remainder of the light pattern). In step 1120, the light pattern is detected utilizing a plurality of optical sensors in a display area of the display panel. In step 1130, a position and an orientation (for example, six degrees of positional information) of the light source (or pointer) with respect to the optical sensor array (or display panel) is determined by a processor utilizing the detected light pattern. For example, a corresponding three or more non-collinear points may be determined in the detected light pattern by the processor, the processor using homography analysis to compare the corresponding three or more non-collinear points in the detected light pattern against a reference light pattern (including the three of more non-collinear points) of the light source.

Embodiments of the present invention enable a host of useful applications. For example, in one embodiment, a light beam source may be integrated into 3-D glasses to allow the display system to track the head of a user and render 3-D content appropriate for each user's position. In one extension of such an embodiment, a virtual 3-D image could be rendered to appear as directly manipulated by a pointer (including fingertips fitted with light beam sources), in which a segment of the light beam is rendered in the image to appear to extend from the pointer into the view of the user. In an embodiment with a multi-view 3-D system, each user could be shown 3-D renderings appropriate for each user position as the head moves.

In other embodiments, games may be constructed that make use of knowledge of the relative position either of an object or of points on a user to create a high-fidelity virtual reality experience. In an office embodiment, multiple unique pointers may be used by different users to collaboratively interact with a display. The pointer would act much like a laser pointer but with the further ability to not only point but also "click." For example, in one embodiment, buttons on the pointer could be used to alter the projected image and thereby signal a "mouse click" operation, thus allowing a pointer device operation from across the room. In another embodiment, these same pointers could also serve as virtual markers to support drawing on the display, such as to mark on content or to support a virtual white board including remote collaborative interaction when networked with a companion display located remotely.

In another embodiment of the present invention, a 3-D rendering system for one or more users is provided. Here, virtual, 3-D objects are rendered by an imager (e.g., a 3-D display system that uses, for example, a display system that displays two different images and corresponding polarized 3-D glasses to separate the images for their respective eyes) under the control of the one or more users. For instance, each user may have a stylus that functions as an optical pointer (e.g., as described in the above embodiments) with the imager. In addition, the 3-D glasses may have their own pointers or light sources as described above and be used to track the corresponding user's head (to provide further input to the 3-D rendering system on what portion of the 3-D image is being manipulated by, for example, the stylus). The stylus may have buttons (like those of a mouse or other pointing device) to enable 3-D rendering functions.

Such a 3-D rendering system would provide head tracking and pointer tracking for one or more users concurrently. This is a more collaborative environment (by accommodating multiple users in a larger interactive volume) than is possible with comparable implementations.

While the present invention has been described in connection with certain example embodiments, it is to be understood that the invention is not limited to the disclosed embodiments, but, on the contrary, is intended to cover various modifications and equivalent arrangements included within the scope of the appended claims, and equivalents thereof.

## Claims

1. A pose determination system comprising:
a light source configured to emit a pattern of light corresponding to three or more non-collinear points; and
a display panel comprising a plurality of optical sensors in a display area, the optical sensors being configured to detect the light pattern,
wherein the pose determination system is configured to determine a position of the light source with respect to the display panel utilizing the detected light pattern.

2. The pose determination system of claim 1, wherein the light pattern is asymmetric with respect to rotations.

3. The pose determination system of claim 1 or 2, wherein a portion of the light pattern is modulated differently than a remainder of the light pattern.

4. The pose determination system of one of the preceding claims, wherein the pose determination system is further configured to determine the position of the light source with respect to the display panel by detecting a corresponding said three or more non-collinear points in the detected light pattern.

5. The pose determination system of one of the preceding claims, further comprising a pointer comprising the light source, and/or
wherein the pointer comprises two or more pointers having separable respective said light patterns, and
wherein the pose determination system is further configured to determine positions of the two or more pointers with respect to the display panel utilizing respective said detected light patterns.

6. The pose determination system of one of the preceding claims, further comprising a processor configured to utilize a reference said light pattern and the detected light pattern to determine the position of the light source with respect to the display panel.

7. The pose determination system of claim 6, wherein the processor is further configured to compare the detected light pattern against the reference light pattern.

8. The pose determination system of claim 6, wherein the processor is further configured
to determine an orientation of the light source with respect to the display panel utilizing the detected light pattern, and/or
to determine six degrees of positional information of the light source with respect to the display panel utilizing the detected light pattern, and/or
to determine the position and the orientation of the light source with respect to the display panel utilizing homography analysis.

9. The pose determination system of claim 1, wherein the light source comprises a laser and one or more diffraction optics in front of the laser, and/or wherein the light source comprises a non-collimated light source and a patterned light mask in front of the non-collimated light source.

10. A method for determining a pose of a light source with respect to a display panel, the method comprising:
emitting light from the light source and having a pattern corresponding to three or more non-collinear points;
detecting the light pattern utilizing a plurality of optical sensors in a display area of the display panel; and
determining by a processor a position of the light source with respect to the display panel utilizing the detected light pattern.

11. The method of claim 10, wherein the light source comprises two or more light sources configured to emit separable respective said light patterns, the method further comprising determining the positions of the two or more light sources with respect to the display panel utilizing respective said detected light patterns.

12. The method of claim 10, further comprising comparing by the processor the detected light pattern against a reference said light pattern.

13. The method of claim 10, further comprising determining by the processor an orientation of the light source with respect to the display panel utilizing the detected light pattern.

14. A display panel for determining a pose of a pointer comprising a light source configured to emit light having a pattern corresponding to three or more non-collinear points, the display panel comprising:
a display area comprising a plurality of optical sensors configured to detect the light pattern as emitted from the light source; and
a processor,
wherein the processor is configured to determine a position of the pointer with respect to the display panel by detecting a corresponding said three or more non-collinear points in the detected light pattern.

15. The display panel of claim 14,
wherein the pointer comprises two or more pointers having separable respective said light patterns, and
wherein the processor is further configured
to determine the positions of the two or more pointers with respect to the display panel utilizing respective said detected light patterns, and/or
to determine an orientation of the pointer with respect to the display panel utilizing the detected light pattern.
